# EUROPÄISCHE PATENTSCHRIFT

(11) **EP 1 628 050 B1**
(45) Veröffentlichungstag und Bekanntmachung des Hinweises auf die Patenterteilung: **31.12.2008**
(21) Anmeldenummer: 05014797.4
(22) Anmeldetag: 07.07.2005
(51) Int. Cl.: F16J 15/08, F01N 7/18

(54) **Metallische Flachdichtung mit verkürzter Dichtungslage**
Metallic gasket with reduced sealing layer
Joint plat métallique avec feuille d'étanchéité réduite

(30) Priorität: 20.08.2004 DE 102004040516
(43) Veröffentlichungstag der Anmeldung: 22.02.2006
(73) Patentinhaber: REINZ-Dichtungs-GmbH, 89233 Neu-Ulm (DE)
(72) Erfinder: Blersch, Robert, 88487 Baltringen (DE); Egloff, Georg, 89264 Weissenhorn (DE)
(74) Vertreter: Tomerius, Isabel

(56) Entgegenhaltungen:
- GB-A- 2 053 382
- US-A- 5 118 121

## Beschreibung

Die Erfindung betrifft eine metallische Flachdichtung mit wenigstens zwei metallischen Dichtungslagen, von denen eine eine größere räumliche Ausdehnung aufweist als die andere, verkürzte Dichtungslage. Bei mehr als zwei metallischen Dichtungslagen kann auch mehr als eine Lage verkürzt sein. Mehrlagige Flachdichtungen, in denen die einzelnen Dichtungslagen unterschiedliche räumliche Ausdehnungen aufweisen, sind im Stand der Technik grundsätzlich bekannt. Häufig hat die unterschiedliche Größe der Dichtungslagen ihre Ursache in besonderen Fertigungsverfahren für die Dichtungslagen. So wird in der DE 10031095 A1 ein Verfahren zur Herstellung von Dichtungslagen beschrieben, bei dem am Außenrand der Dichtungslage scharfkantige Ecken entstehen. Es wird vorgeschlagen, diese Ecken dadurch abzudecken, dass entsprechende Bereiche einer benachbarten Dichtungslage seitlich über die scharfkantigen Ecken hinaus herausgezogen werden.

Zweck des in der DE 10031095 A1 beschriebenen Freischneidverfahrens ist es, möglichst wenig Blechmaterial zur Herstellung der Dichtungslagen zu verbrauchen und den Verschnitt zu reduzieren. Hierfür werden die einzelnen Dichtungslagen eng verschachtelt auf dem Ausgangsblech angeordnet, so dass sie möglichst viele aneinanderliegende Außenränder und damit gemeinsame Schnittlinien aufweisen. Allerdings ist es nur in einem beschränkten Rahmen möglich, die Außenkonturen einer Dichtung frei zu bestimmen. Die Verschachtelungsmöglichkeit einzelner Dichtungskörper auf einem Metallblech als Ausgangsmaterial für die einzelnen Dichtungslagen ist daher beschränkt, und die Einsparungsmöglichkeiten an Material sind begrenzt.

Aufgrund des hohen Kostendrucks und der zunehmenden Kosten für die Ausgangsmaterialien, insbesondere der hohen Stahlpreise, besteht daher ein Bedarf an Dichtungen (siehe auch GB-A-2053382), die mit möglichst wenig metallischem Ausgangsmaterial gefertigt werden können. **Aufgabe** der Erfindung ist es entsprechend, eine derartige metallische Flachdichtung anzugeben, die trotz geringen Materialverbrauchs zu einer sicheren Abdichtung der abzudichtenden Gegenflächen führt.

Die Lösung dieser Aufgabe gelingt mit der metallischen Flachdichtung gemäß Anspruch 1. Weiterbildungen sind in den Unteransprüchen beschrieben.

Die Erfindung betrifft also eine metallische Flachdichtung mit wenigstens zwei übereinander angeordneten metallischen Dichtungslagen, von denen eine erste eine größere räumliche Ausdehnung in der Dichtungslagenebene aufweist als die zweite, verkürzte Dichtungslage. Während also die erste Dichtungslage in bisher üblicher Weise eine für die Abdichtung der abzudichtenden Gegenflächen möglichst optimale flächige Ausdehnung aufweist, fehlt der zweiten, verkürzten Dichtungslage wenigstens ein Bereich, der in der größeren ersten Dichtungslage vorhanden ist. Um die Abdichtungseigenschaften der metallischen Flachdichtung nicht zu beeinträchtigen, liegt der fehlende Bereich der verkürzten Dichtungslage zweckmäßig in ausreichender Entfernung von den abdichtenden Bereichen, das heißt den Dichtelementen, welche die abzudichtenden Durchgangsöffnungen in der metallischen Flachdichtung umgeben. Erfindungsgemäß wird für diesen ausgesparten Bereich der Bereich um eine Öffnung gewählt, die zur Aufnahme eines Befestigungsmittels bestimmt ist. Das Befestigungsmittel, das beispielsweise eine Schraube oder ein Bolzen sein kann, dient der Befestigung der erfindungsgemäßen metallischen Flachdichtung an den abzudichtenden Gegenflächen.

An welcher Stelle der ausgesparte Bereich in der verkürzten Dichtungslage vorhanden ist, ist - mit den obigen Einschränkungen - grundsätzlich beliebig. So kann sich der ausgesparte Bereich im Inneren der verkürzten Dichtungslage befinden und von der restlichen Dichtungslage eingeschlossen sein. Bevorzugt wird jedoch ein Randbereich der Dichtungslage ausgespart. Oft sind metallische Flachdichtungen so aufgebaut, dass die mit Dichtelementen abgedichteten Öffnungen für Gas oder Flüssigkeit in einem inneren Bereich der Dichtungslage angeordnet sind, während sich Öffnungen für Befestigungsmittel wie Schrauben oder Bolzen zumindest teilweise in einem Randbereich der Dichtungslage befinden. Häufig, beispielsweise im Falle von Krümmerdichtungen, weisen die Dichtungslagen an ihrem Außenrand auch Auskragungen auf, die speziell zur Aufnahme von Befestigungsöffnungen vorhanden sind. In solchen Fällen bietet es sich an, den gesamten Bereich der Dichtungslage von deren Außenrand bis zur Öffnung für das Befestigungsmittel auszusparen. Beispielsweise fehlt also in der verkürzten Dichtungslage der erfindungsgemäßen metallischen Flachdichtung der auskragende Randbereich vollständig. Auf diese Weise werden nicht nur besonders große Materialeinsparungen erreicht, sondern es ist häufig möglich, den Verlauf des Außenrandes der verkürzten Dichtungslage gegenüber der nicht verkürzten Dichtungslage zu begradigen. Der begradigte Randverlauf wiederum erlaubt es, die einzelnen Dichtungslagen, die aus einem Ausgangs-Metallblech gestanzt werden sollen, besonders platzsparend nebeneinander anzuordnen und so weiteres metallisches Material einzusparen und Verschnitt zu vermeiden.

Die Materialeinsparung in der verkürzten Dichtungslage, insbesondere bei Aussparung größerer Bereiche, wirkt sich jedoch in der Regel indirekt auf die Abdichtung der in der Flachdichtung vorhandenen Gas- und/oder Flüssigkeitsöffnungen aus - und das auch dann, wenn der ausgesparte Bereich einen relativ großen Abstand zu den dichtenden Bereichen der Dichtung aufweist. Durch Wegnahme von Material aus der verkürzten Dichtungslage im Bereich der Öffnung für ein Befestigungsmittel ist die Gesamtdicke der Dichtungslagen hier geringer als in denjenigen Bereichen, in denen kein Material ausgespart wurde - also im Bereich der Gas- oder Flüssigkeitsöffnungen. Diese Dickenverminderung würde die Anbindung der Befestigungsmittel gegenüber herkömmlichen metallischen Flachdichtungen verschlechtern. Die Flächenpressung nähme in Richtung auf die Schrauben hin ab und wäre insgesamt verringert. Dies würde letztendlich zu einer Verschlechterung der gesamten Abdichtwirkung führen, was nicht hingenommen werden kann. Um der Verringerung der Flächenpressung entgegen zu wirken, schlägt die Erfindung daher vor, in dem Bereich der ersten, ausgedehnteren Dichtungslage, die die Öffnung für das Befestigungsmittel enthält, ein Höhenausgleichselement vorzusehen, welches die Öffnung zumindest teilweise umgibt. Dieses Höhenausgleichselement kompensiert den Dickenverlust, der durch Wegnahme eines Teils der zweiten, verkürzten Dichtungslage in diesem Bereich entstanden ist. Das Höhenausgleichselement sorgt so dafür, dass mit dem Befestigungsmittel eine ausreichende Flächenpressung erzielt werden kann und kein nennenswerter Verlust der Abdichtwirkung gegenüber herkömmlichen metallischen Flachdichtungen beobachtet wird.

Das Höhenausgleichselement ist zweckmäßig auf derjenigen Seite der ersten, unverkürzten Dichtungslage angeordnet, die der verkürzten Dichtungslage zugewandt ist. Denkbar wäre grundsätzlich auch eine Anordnung des Höhenausgleichselements auf der von der verkürzten Dichtungslage abgewandten Seite der ersten Dichtungslage. Um Verzüge in der Dichtung zu verhindern, müssten in diesem Fall jedoch im Allgemeinen Maßnahmen zur Symmetrierung der Flachdichtung ergriffen werden, wie beispielsweise das Einfügen einer Kröpfung.

Die Höhe des Höhenausgleichselements wird in der Regel so gewählt werden, dass mit dem Höhenausgleichselement der Dickenverlust ausgeglichen wird, der durch Wegnahme eines Teilbereichs aus der zweiten, verkürzten Dichtungslage entstanden ist. Weist die erfindungsgemäße metallische Flachdichtung also eine verkürzte Dichtungslage auf, wird das Höhenausgleichselement in der Regel eine Höhe besitzen, die im Wesentlichen der Dicke der verkürzten Dichtungslage entspricht. Möglich ist es aber auch, das Höhenausgleichselement an die speziellen Bauteilgeometrien oder Abdichtungsanforderungen gezielt anzupassen. Um Verzügen an den angrenzenden Bauteilen (z.B. Auspuffkrümmer, Zylinderkopf, Zylinderkurbelgehäuse) im eingebauten Zustand gezielt entgegenzuwirken oder die Pressungsverteilung innerhalb der Dichtung zu optimieren, können die Höhenausgleichselemente eine Höhe besitzen, die größer oder kleiner ist als die Dicke der kompensierten ausgesparten Dichtungslagenbereiche. Sind in einer verkürzten Dichtungslage mehrere ausgesparte Bereiche vorhanden, können sich die Höhenausgleichselemente in den jeweiligen Bereichen voneinander unterscheiden. Beispielsweise können die Höhenausgleichselemente in den Bereichen, in denen eine größere Flächenpressung erzielt werden soll, eine größere Höhe besitzen, als in den restlichen Bereichen. Zudem muss die Höhe eines einzelnen Höhenausgleichselements nicht über dessen Ausdehnung einheitlich sein. Denkbar sind beispielsweise Höhenausgleichselemente, deren Höhe in einer Richtung, beispielsweise in Richtung auf eine abzudichtende Gas- oder Flüssigkeitsöffnung hin, ansteigt oder abfällt.

Wie erwähnt, kann die metallische Flachdichtung mehrere Aussparungen pro verkürzte Dichtungslage enthalten, von denen wenigstens eine durch ein Höhenausgleichselement kompensiert wird. In dem Bereich der ersten, ausgedehnteren Dichtungslage, die einem ausgesparten Bereich der verkürzten Dichtungslage gegenüber liegt, können auch mehrere Öffnungen zur Aufnahme von Befestigungsmitteln vorhanden sein, von denen wenigstens eine ein Höhenausgleichselement aufweist. Es können auch mehrere Befestigungsmittelöffnungen von einem gemeinsamen Höhenausgleichselement abgestützt werden.

Die erfindungsgemäße metallische Flachdichtung kann eine beliebige Anzahl metallischer und gegebenenfalls zusätzlich nichtmetallischer Dichtungslagen und/oder Beschichtungen enthalten. Bei den zusätzlichen Dichtungslagen kann es sich sowohl um verkürzte als auch um nicht verkürzte Dichtungslagen handeln. Bei mehreren verkürzten Dichtungslagen können Höhenausgleichselemente für die ausgesparten Bereiche einer jeden der verkürzten Dichtungslagen in einer jeweils zugeordneten unverkürzten Dichtungslage vorhanden sein. Sind mehrere zueinander benachbarte verkürzte Dichtungslagen vorhanden, in denen die ausgesparten Bereiche übereinander zu liegen kommen, kann für diese Bereiche ein gemeinsames Höhenausgleichselement verwendet werden. Dieses wird üblicherweise eine Höhe besitzen, die im Wesentlichen der Gesamtdicke der verkürzten Dichtungslagen entspricht. Auch in einem solchen Fall kann jedoch die Höhe des Höhenausgleichselements zum Ausgleich von Verzügen oder aus ähnlichen Gründen variiert werden, wie vorstehend dargelegt.

Sind in der metallischen Flachdichtung zwei verkürzte Dichtungslagen vorhanden, zwischen denen eine Dichtungslage mit größerer räumlicher Ausdehnung angeordnet ist, weist letztere zweckmäßig zu ihren beiden Seite jeweils ein Höhenausgleichselement pro ausgesparten Bereich der verkürzten Dichtungslagen auf. Da es üblicherweise das Ziel sein wird, auf der vorgegebenen Dichtungsfläche möglichst große Bereiche an Materialaussparungen vorzusehen, werden sich die ausgesparten Bereiche der verkürzten Dichtungslagen sowohl in ihrer Lage als auch in ihrer Form im Wesentlichen entsprechen. Es ist jedoch ebenso gut möglich, dass sich die Aussparungen in den beiden verkürzten Dichtungslagen in Form und/oder Lage voneinander unterscheiden. Entsprechend können Form und Lage der Höhenausgleichselemente zu beiden Seiten der zwischen den verkürzten Dichtungslagen angeordneten ersten Dichtungslage variieren.

Das Höhenausgleichselement kann als separates Teil gefertigt und an der ersten Dichtungslage angeordnet oder es kann aus der Dichtungslage herausgeformt sein. Es kann die Befestigungsmittelöffnung ganz oder nur teilweise umgeben. Die Ausgestaltung des Höhenausgleichselements ist dabei nicht besonders beschränkt. Grundsätzlich können beispielsweise alle solchen Elemente verwendet werden, die bisher in metallischen Flachdichtungen wie Krümmer- oder Zylinderkopfdichtungen als so genannte Stopper im Einsatz sind, das heißt als Verformungsbegrenzer für Sicken oder sonstige Dichtelemente, mit denen eine Gas- oder Flüssigkeitsöffnung abgedichtet wird. Zweck des Höhenausgleichselements in der erfindungsgemäßen metallischen Flachdichtung ist es jedoch nicht, als Verformungsbegrenzer für ein Dichtelement oder als Dichtelement zu wirken, das für eine Schrauben- oder Bolzenöffnung auch in aller Regel nicht benötigt wird, sondern lediglich einen Höhenausgleich für die ausgesparten Bereiche zu schaffen.

In einer ersten Variante ist das Höhenausgleichselement eine an der ersten Dichtungslage befestigte Auflage. Die Auflage kann lose auf die erste Dichtungslage aufgelegt oder an dieser befestigt sein. Bei der Auflage handelt es sich zwar um ein separat zu fertigendes Bauteil, es besitzt jedoch den Vorteil, dass seine Höhe frei gewählt werden kann. Besonders geeignet sind ringförmige Auflagen, die entweder unmittelbar am Öffnungsrand der Befestigungsmittel-Öffnung verlaufen oder mit einem Abstand zu diesem. Die Auflage kann auch eine um den Rand der Befestigungsmittel-Öffnung gebogene Einfassung sein. Auf diese Weise ergeben sich Höhenausgleichselemente zu beiden Seiten der ersten Dichtungslage, wie sie insbesondere bei Dichtungen mit zwei verkürzten Dichtungslagen bevorzugt sind.

In einer zweiten Variante wird das Höhenausgleichselement durch Umbiegen eines Abschnitts der ersten Dichtungslage gebildet. Beispielsweise kann das Höhenausgleichselement als Bördel ausgebildet sein, der durch Umbiegen des Dichtungsrandes im Bereich der Öffnung für das Befestigungsmittel erhalten wurde. Der Bördel kann flach an die erste Dichtungslage anliegend zurückgebogen werden oder unter Belassung eines Abstands zur ersten Dichtungslage, beispielsweise in Form eines so genannten α-Falzes.

In einer anderen Möglichkeit wird das Material für das Höhenausgleichselement aus dem Inneren der späteren Befestigungsmittel-Öffnung herausgebogen. Hierzu werden im Innenbereich der späteren Öffnung Trennlinien zwischen einzelnen Segmenten unter Belassung einer Biegekante am Öffnungsrand erzeugt. Anschließend werden die freigetrennten Segmente aus dem Inneren der späteren Öffnung heraus nach außen gebogen. Dadurch wird die Befestigungsmittel-Öffnung freigelegt, und um deren Umfang herum werden einzelne Abschnitte des Höhenausgleichselements erzeugt. Die Anzahl der einzelnen Segmente ist grundsätzlich beliebig, jedoch sollten wenigstens drei Segmente vorhanden sein, um eine gleichmäßige Abstützung des Befestigungsmittels auf dem Höhenausgleichselement zu gewährleisten.

Ist um die Befestigungsmittel-Öffnung hinreichend Platz vorhanden, kann das Höhenausgleichselement auch durch Umfalzen von Material der ersten Dichtungslage aus dem Bereich um die Öffnung herum gebildet werden. Hierzu werden erneut die Außenkonturen der einzelnen Teilabschnitte des Höhenausgleichselements unter Belassung einer Biegekante um die Öffnung herum in das Material der ersten Dichtungslage eingeschnitten. Zweckmäßig werden erneut wenigstens drei Teilabschnitte des Höhenausgleichselements regelmäßig um die Öffnung herum erzeugt. Die freigestanzten oder freigeschnittenen Bereiche werden anschließend auf die erste Dichtungslage zurückgefalzt.

Ist im Bereich um die Befestigungsmittel-Öffnung herum nicht genug Platz für die Umfalzung vorhanden, ist es möglich, am Dichtungsaußenrand einen auskragenden Bereich vorzusehen, der auf die Befestigungsmittel-Öffnung zurückgefalzt wird. Um die Öffnung nicht abzudecken, weist die Auskragung ebenfalls eine Öffnung auf, die nach dem Zurückfalzen auf der Befestigungsmittel-Öffnung zu liegen kommt.

Werden die umgefalzten Bereiche einfach und flach auf die erste Dichtungslage zurückgebogen, besitzt das Höhenausgleichselement eine Höhe, die der Dicke der ersten Dichtungslage entspricht. Es ist jedoch auch möglich, durch wiederholtes Umfalzen der ersten Dichtungslage auf sich selbst, ein Höhenausgleichselement zu schaffen, das eine mehrfache Dicke der ersten Dichtungslage aufweist. Außerdem ist es möglich, durch Umfalzen von Material der ersten Dichtungslage sowohl auf deren erste Seite hin als auch auf deren zweite Seite hin Höhenausgleichselemente zu schaffen, die zu beiden Seiten der ersten Dichtungslage vorstehen.

In einer weiteren Variante besteht das Höhenausgleichselement aus einer wellen- und/oder trapezförmigen Prägung der ersten Dichtungslage. In der einfachsten Form ist unter einer wellen- und/oder trapezförmigen Prägung eine einfache Auswölbung der ersten Dichtungslage zu verstehen, also eine Sicke. Die Sicke kann dabei jede grundsätzlich bekannte Form aufweisen, also beispielsweise rund oder eckig sein. In einer Weiterbildung der Erfindung sind mehrere Sicken hintereinander in der ersten Dichtungslage angeordnet und ergeben so ein Höhenausgleichselement in Wellenform. Stehen die Prägungen zu beiden Seiten der ersten Dichtungslage über, können Höhenausgleichselemente erhalten werden, die Aussparungen kompensieren, die in beidseitig der ersten Dichtungslage angeordneten verkürzten Dichtungslage vorhanden sind. Zudem ist es möglich, die wellen- und/oder trapezförmige Prägung mit einem Falz zu kombinieren. Hierzu wird der - glatte oder ebenfalls gewellte - Randbereich der ersten Dichtungslage auf die wellen- und/oder trapezförmige Prägung zurückgefalzt und ergibt so ein auf einer der Seiten der ersten Dichtungslage vorstehendes Höhenausgleichselement. Vorzugsweise sind die wellen- und/oder trapezförmigen Prägungen so ausgebildet, dass sie die Befestigungsmittelöffnungen vollständig umschließen.

Bei mehreren Höhenausgleichselementen pro Dichtung können die beschriebenen Höhenausgleichselemente beliebig miteinander kombiniert werden. Beispielsweise können die aus einer Auflage oder umgefalzten Bereichen der ersten Dichtungslage bestehenden Höhenausgleichselemente an solchen Stellen der metallischen Flachdichtung eingesetzt werden, in denen eine besonders hohe Flächenpressung erreicht werden soll, während es bei wellen- oder trapezförmigen Prägungen möglich ist, insbesondere durch Variation der Prägetiefe so anzupassen, dass die benötigte (höhere oder geringere) Flächenpressung resultiert.

Die Erfindung eignet sich grundsätzliche für jede Art von metallischer Flachdichtung, beispielsweise für Zylinderkopf- oder Krümmerdichtungen oder sonstige Flanschdichtungen. Von Vorteil ist, dass sowohl die Aussparungen in den verkürzten Dichtungslagen als auch die Höhenausgleichselemente innerhalb der herkömmlichen Fertigungsschritte der Flachdichtung erzeugt werden können. Beispielsweise können die erforderlichen Stanz-, Schneid- oder Umfalzschritte im Rahmen der bereits bisher angewendeten derartigen Verfahren erledigt werden.

Die Erfindung soll nachfolgend am Beispiel von Krümmerdichtungen näher erläutert werden, ohne dass die Erfindung jedoch auf derartige Dichtungen beschränkt wäre. Die Zeichnungen stellen schematisch und lediglich zur näheren Erläuterung einige beispielhafte Ausführungsformen der Erfindung dar. In den Zeichnungen bezeichnen gleiche Bezugszeichen gleiche Teile.

In den Zeichnungen zeigen
- Fig. 1: eine Draufsicht auf eine metallische Flachdichtung am Beispiel einer Krümmerdichtung,
- Fig. 2: eine Teildraufsicht auf eine weitere Ausführungsform einer erfindungsgemäßen Krümmerdichtung,
- Fig. 3 bis 12: Teilansichten verschiedener Ausführungsvarianten erfindungsgemäßer Krümmerdichtungen im Querschnitt entlang der Linie A-A in Fig. 2 und
- Fig. 13 und 14: Teildraufsichten auf weitere Ausführungsformen Krümmerdichtungen.

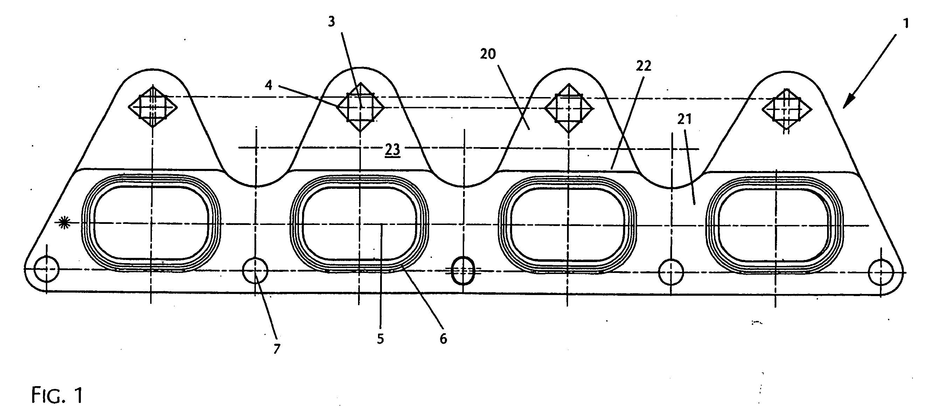

Fig. 1 zeigt eine erfindungsgemäße Krümmerdichtung 1. Die Krümmerdichtung 1 besteht aus zwei metallischen Dichtungslagen 20 und 21, beispielsweise aus Federstahl. Die in Blickrichtung hintere Dichtungslage 20 besitzt eine größere räumliche Ausdehnung als die vordere Dichtungslage 21. Beide Dichtungslagen 20 und 21 weisen in ihrem unteren Bereich vier nebeneinander angeordnete, miteinander korrespondierende Öffnungen 5 für Brenngas auf. In beiden Dichtungslagen 20 und 21 sind die Öffnungen 5 jeweils von einem Dichtelement 6 vollständig umgeben. Bei den Dichtelementen 6 kann es sich beispielsweise um in die Dichtungslagen eingeformte Sicken handeln. Die Scheitelpunkte der Sicken der beiden Dichtungslagen 20, 21 sind beispielsweise aufeinander zugewandt. Am unteren Rand der Dichtungslagen 20 und 21 sind seitlich der Brenngasöffnungen 5 Öffnungen 7 zur Aufnahme von Befestigungsmitteln wie Schrauben oder Bolzen vorhanden, mit denen die metallische Krümmerdichtung 1 an den abzudichtenden Gegenflächen befestigt werden kann.

Weitere Öffnungen 3 zur Aufnahme von Befestigungsmitteln sind im oberen Bereich der Krümmerdichtung 1 vorhanden. Diese Öffnungen 3 befinden sich jedoch lediglich in der flächenmäßig größeren Dichtungslage 20. Die Befestigungsmittel-Öffnungen 3 sind hier in zungenartig auskragenden Bereichen 23 angeordnet. Im Unterschied dazu endet die verkürzte Dichtungslage 21 mit dem Rand 22 kurz nach den Dichtelementen 6 für die Brenngasöffnungen 5. In den auskragenden Bereichen 23 dagegen fehlt die verkürzte Dichtungslage 21.

Die Dickenreduzierung in den auskragenden Bereichen 23 würde ohne weitere Maßnahmen beim Befestigen der Krümmerdichtung 1 zwischen den abzudichtenden Gegenflächen zu einem verringerten Vorspannung der Schrauben oder Bolzen in den Befestigungsmittel-Öffnungen 3 führen. Dieser Verlust an Flächenpressung würde auch die Abdichteigenschaften im Bereich der Brenngasöffnungen 5 verschlechtern. Erfindungsgemäß ist daher für jede der Befestigungsmittel-Öffnungen 3 der Krümmerdichtung 1 ein Höhenausgleichselement 4 vorgesehen. Im gezeigten Beispiel sind die Höhenausgleichselemente 4 für alle Öffnungen 3 gleich ausgebildet. Die Höhenausgleichselemente 4 werden dadurch erzeugt, dass Bereiche der Dichtungslage 20 aus dem Inneren der späteren Öffnungen 3 heraus nach außen auf die Dichtungslage 20 zurückgefalzt werden. Hierfür werden in die Dichtungslage 20 im Bereich der späteren Öffnungen 3 Kreuzschlitze eingestanzt. Dieser Stanzvorgang kann gemeinsam mit dem Einstanzen der weiteren Öffnungen 5 und 7 in die Dichtungslage 20 ausgeführt werden. Die freigestanzten dreieckigen Elemente jedes Höhenausgleichselements 4 werden dann um die späteren Ränder der Öffnungen 3 herum nach außen umgebogen, so dass sich rechteckige Öffnungen zur Aufnahme der Befestigungsmittel ergeben. Wenn die beiden Dichtungslagen 20 und 21 von gleicher Dicke sind, ergibt sich so für jede der Öffnungen 3 ein Höhenausgleichselement 4, das mit der gleichen Dicke über die Dichtungslage 20 vorsteht wie die Dicke der Dichtungslage 21. Die Gesamtdicke der Krümmerdichtung 1 im Bereich der Öffnungen 3 entspricht damit der Gesamtdicke im Bereich der Öffnungen 7, so dass in allen Befestigungsmittel-Öffnungen der Dichtung 1 ein im Wesentlichen gleichmäßiger Vorspannung erzielt werden kann.

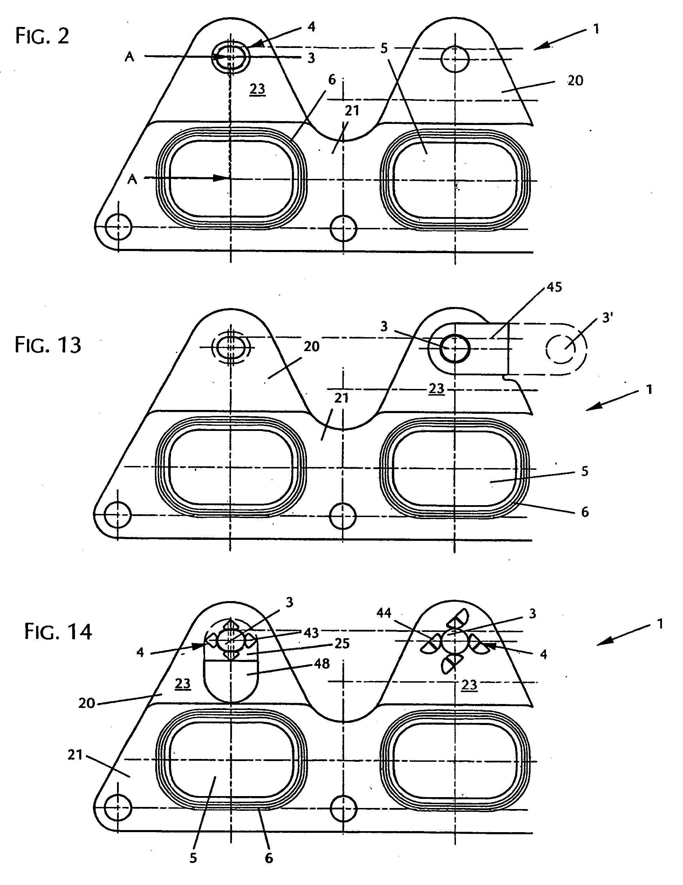

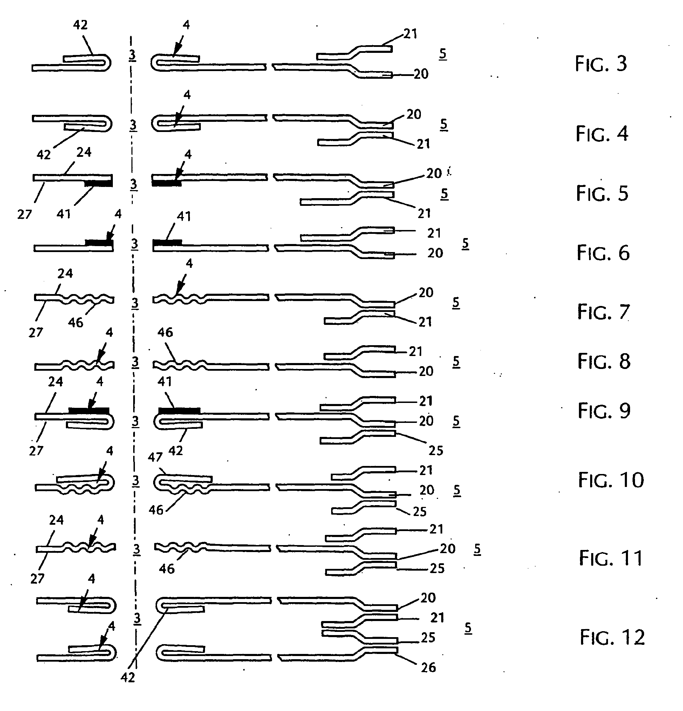

Fig. 2 zeigt eine andere Ausführungsform einer erfindungsgemäßen Krümmerdichtung 1 in Teildraufsicht. Der Grundaufbau entspricht im Wesentlichen demjenigen in Fig. 1. Die Dichtungen unterscheiden sich jedoch in der Ausgestaltung um die Befestigungsmittel-Öffnungen 3. Fig. 3 bis 12 zeigen Querschnitte entlang der Linie A-A der Fig. 2. In Fig. 2 ist lediglich für die in der Figur links dargestellte Öffnung 3 ein Höhenausgleichselement 4 vorhanden. Für die in der Figur rechts dargestellte Öffnung 3 ist dagegen kein Höhenausgleichselement eingezeichnet. Tatsächlich ist es für die erfindungsgemäßen Dichtungen auch nicht unbedingt erforderlich, dass sämtliche Öffnungen 3 zur Aufnahme von Befestigungsmitteln mit Höhenausgleichselementen versehen sind. Bevorzugt ist es jedoch, dass alle Öffnungen 3 ein Höhenausgleichselement 4 besitzen, wobei sich die Höhenausgleichselemente von Öffnung zu Öffnung auch unterscheiden und beispielsweise die verschiedenen in Fig. 3 bis 12 dargestellten Varianten miteinander kombiniert werden können.

In Fig. 3 bis 12 ist die Öffnung 3 für das Befestigungsmittel jeweils im linken Bereich der Zeichnungen dargestellt, während die Öffnung 5 für Brenngas rechts angeordnet ist. Jede Öffnung 5 wird von einem Dichtelement 6 in Form von in die Dichtungslagen 20 und 21 und gegebenenfalls 25 und 26 eingeformten Sicken gebildet. Die Öffnungen 3 für Befestigungsmittel werden jeweils vollständig von Höhenausgleichselementen 4 eingeschlossen. In dem in Fig. 3 dargestellten Beispiel wird das Höhenausgleichselement 4 von einem Bördel 42 gebildet, welcher durch Umbiegen des Randes der Dichtungslage 20 im Bereich der Öffnung 3 entstanden ist. Der Bördelschenkel weist dabei in Richtung auf die verkürzte Dichtungslage 21.

Die in Fig. 4 dargestellte Dichtung entspricht im Wesentlichen derjenigen der Fig. 3, wobei jedoch die Sicken 6 in den Dichtungslagen 20 und 21 mit ihren Scheitelpunkten zueinander angeordnet sind, während in der Dichtung gemäß Fig. 3 die Scheitelpunkte der Sicken voneinander weg weisen.

Fig. 5 und 6 stellen Krümmerdichtungen dar, die in ihrem Grundaufbau im Wesentlichen denjenigen der Fig. 4 bzw. 3 entsprechen. Die Dichtungen unterscheiden sich jedoch in der Ausbildung des Höhenausgleichselements 4. Anstelle des Bördels 42 ist in den in Fig. 5 und 6 gezeigten Dichtungen ein Höhenausgleichselement in Form einer ringförmigen Auflage 41 vorhanden, die um die Öffnungen 3 herum verläuft, eine Dicke von im Wesentlichen der Dicke der Dichtungslage 21 aufweist und an der Dichtungslage 20 beispielsweise durch Löten oder Schweißen befestigt ist.

Fig. 7 und 8 zeigen erneut Dichtungen, die in ihrem grundsätzlichen Aufbau denjenigen der Fig. 4 und 5 bzw. 3 und 6 entsprechen. Als Höhenausgleichselement 4 ist hier jedoch jeweils eine wellenförmige Prägung 46 in die Dichtungslage 20 eingeformt. Die Wellenform kann gemeinsam mit dem Einprägen der Sicke 6 in die Dichtungslage 20 erzeugt werden.

Fig. 9 bis 12 zeigen Teilquerschnitte durch erfindungsgemäße Krümmerdichtungen, die zwei verkürzte Dichtungslagen 21, 25 aufweisen. Beide verkürzten Dichtungslagen 21, 25 weisen jeweils eine Aussparung dort auf, wo sich in der Dichtungslage 20 die Auskragungen 23 mit den Befestigungsmittel-Öffnungen 3 befinden.

In der Dichtung gemäß Fig. 9 sind die verkürzten Dichtungslagen 21, 25 zu beiden Seiten 24, 27 der ersten Dichtungslage 20 angeordnet. Höhenausgleichselemente 4 sind zu beiden Seiten der ersten Dichtungslage 20 vorhanden. Auf der ersten Seite 24 der Dichtungslage 20 besteht das Höhenausgleichselement 4 aus einer ringförmigen Auflage 41, wie sie in Zusammenhang mit Fig. 5 und 6 beschrieben wurde. Auf der zweiten Seite 27 der Dichtungslage 20 dagegen wird das Höhenausgleichselement von einem Bördel 42 gebildet, wie er schon in Fig. 3 und 4 gezeigt wurde.

Die in Fig. 10 dargestellte Dichtung entspricht in ihrem Grundaufbau in etwa derjenigen in Fig. 9. Das Höhenausgleichselement 4 verbindet hier eine wellenförmige Prägung 46 mit einem Bördel. Der sich an die wellenförmige Prägung 46 anschließende Randbereich 47 der Dichtungslage 20 um die Öffnung 3 ist auf die wellenförmige Prägung 46 hin zurückgefalzt. So ergibt sich ein Höhenausgleichselement, das eine größere Höhe besitzt als die doppelte Dicke der Dichtungslage 20 und zudem elastische Eigenschaften aufweist.

In der Dichtung gemäß Fig. 11 werden die Höhenausgleichselemente 4 zu beiden Seiten 24 und 27 der Dichtungslage 20 von einer wellenförmigen Prägung 46 gebildet. Ist die Höhe der wellenförmigen Prägung 46 groß genug ausgelegt, kann sie für beide verkürzten Dichtungslagen 21 und 25 zur Höhenkompensation für die ausgesparten Bereiche dienen. Darum darf sie nicht so weich sein wie eine Sicke.

Fig. 12 zeigt eine Dichtung, in der die beiden verkürzten Dichtungslagen 21, 25 im Inneren der Dichtung 1 zwischen zwei größeren Dichtungslage 20, 26 angeordnet sind. Die Dichtung in Fig. 11 entspricht im Wesentlichen einer spiegelsymmetrischen Verdoppelung der Dichtung gemäß Fig. 4. Für die Beschreibung der Höhenausgleichselemente 4 kann daher auf diese Figur verwiesen werden.

Fig. 13 zeigt eine weitere Ausführungsform einer Krümmerdichtung. Am rechten Rand der in der Abbildung rechten Auskragung 23 steht eine Lasche 45 über, die beim Ausstanzen des Dichtungsbleches 20 zunächst in der Ebene des Bleches liegt (siehe gestrichelte Linie). In die Lasche 45 ist zudem eine Öffnung 3' eingestanzt. In einem weiteren Fertigungsschritt wird die Lasche 45 auf die Auskragung 23 zurückgefalzt, wobei die Öffnung 3' auf der in der Auskragung 23 vorhandenen Öffnung 3 zur Aufnahme des Befestigungsmittels zu liegen kommt.

Fig. 14 schließlich zeigt an den beiden Öffnungen 3 unterschiedliche Varianten von Höhenausgleichselementen 4. Im linken Bereich der Fig. 14 sind Höhenausgleichselemente für eine dreilagige Dichtung 1 dargestellt. Die größere Dichtungslage 20 mit der Auskragung 23 befindet sich in der Mitte der Dichtung zwischen zwei im Wesentlichen gleich großen und spiegelsymmetrisch zu ihren Seiten angeordneten verkürzten Dichtungslagen. Zur Höhenkompensation für die in Blickrichtung vordere verkürzte Dichtungslage 21 ist im Bereich 23 der Dichtungslage 20 eine zungenförmige Lasche 48 herausgebogen. Zur Höhenkompensation für die hinter der Dichtungslage 20 gelegene zweite verkürzte Dichtungslage 25 ist das Höhenausgleichselement aus dem Inneren der späteren Öffnung 3 herausgebogen. Diese Variante entspricht grundsätzlich derjenigen, die in Zusammenhang mit Fig. 1 schon besprochen wurde. Im Unterschied zu letzterer soll hier jedoch eine runde Öffnung 3 erzeugt werden. Dies wird dadurch erreicht, dass im Inneren der Öffnung 3 im Wesentlichen tropfenförmige Segmente 43 freigestanzt werden, die nur über einen schmalen Verbindungssteg mit der Dichtungslage 20 verbunden bleiben und im Bereich dieses Verbindungssteges in Richtung auf die hintere verkürzte Dichtungslage 25 hin umgefalzt werden.

Im rechten Bereich der Fig. 14 sind ebenfalls Höhenausgleichselemente dargestellt, die durch Umfalzen von Teilen 44 der Dichtungslage 20 erzeugt sind. Das umgefalzte Material 44 stammt hier jedoch nicht aus dem Inneren der Öffnung 3, sondern aus Bereichen der Dichtungslage 20 in Nachbarschaft zur Öffnung 3. Hierfür werden an vier verschiedenen Stellen gleichmäßig um Öffnung 3 herum in etwa viertelkreisförmige Einschnitte in die Dichtungslage erzeugt, wobei jeweils eine Biegekante in Nachbarschaft zur Öffnung 3 erhalten bleibt, um die der freigestanzte Teil 44 in Richtung auf die Öffnung 3 hin umgefalzt wird. Die nach dem Umfalzen verbleibenden Löcher haben auf die Dichtung keinerlei negativen Einfluss. Bei einer dreilagigen Dichtung kann dabei ein Teil der Falze auf die Vorderseite der Dichtungslage 20 und der andere Teil auf die Rückseite der Dichtungslage 20 hin umgefalzt werden. Bevorzugt werden dabei sich über die Öffnung 3 hinweg gegenüberliegende Segmente 44 auf die jeweils gleiche Seite der Dichtungslage 20 gefalzt, so dass eine möglichst gleichmäßige Abstützung erhalten wird.

## Patentansprüche

1. Metallische Flachdichtung (1) mit wenigstens zwei übereinander angeordneten metallischen Dichtungslagen (20, 21), von denen eine erste (20) eine größere räumliche Ausdehnung aufweist als die zweite, verkürzte Dichtungslage (21), wobei die erste Dichtungslage (20) in wenigstens einem Bereich (23), in welchem die verkürzte Dichtungslage (21) nicht vorhanden ist, mindestens eine Öffnung (3) zur Aufnahme eines Befestigungsmittels aufweist und im die Befestigungsmittel-Öffnung (3) enthaltenden Bereich (23) ein die Öffnung (3) zumindest teilweise umgebendes Höhenausgleichselement (4) angeordnet ist, das durch Umbiegen eines Abschnitts der ersten Dichtungslage (20) gebildet ist,
**dadurch gekennzeichnet,**
**dass** das Höhenausgleichselement (4) aus Material (44) aus dem Inneren der ersten Dichtungslage (20) aus einem Bereich um die Öffnung (3) herausgeformt ist oder durch Umfalzen von Material (43) aus dem Inneren der späteren Öffnung (3) heraus nach außen unter Freilegung der Öffnung (3) gebildet ist.

2. Metallische Flachdichtung gemäß Anspruch 1,
**dadurch gekennzeichnet,**
**dass** das Höhenausgleichselement auf der Seite (24) der ersten Dichtungslage (20) angeordnet ist, die der verkürzten Dichtungslage (21) zugewandt ist.

3. Metallische Flachdichtung gemäß Anspruch 1 oder 2,
**dadurch gekennzeichnet,**
**dass** das Höhenausgleichselement (4) eine Höhe besitzt, die im Wesentlichen der Dicke der verkürzten Dichtungslage (21) entspricht.

4. Metallische Flachdichtung gemäß einem der vorhergehenden Ansprüche,
**dadurch gekennzeichnet,**
**dass** sie mehrere verkürzte Dichtungslagen (21, 25) aufweist.

5. Metallische Flachdichtung nach einem der vorhergehenden Ansprüche,
**dadurch gekennzeichnet,**
**dass** sie mehrere erste Dichtungslagen mit größerer räumlicher Ausdehnung (20, 26) aufweist.

6. Metallische Flachdichtung gemäß Anspruch 4,
**dadurch gekennzeichnet,**
**dass** sie mehrere zueinander benachbarte verkürzte Dichtungslagen (21, 25) aufweist und das Höhenausgleichselement (4) eine Höhe besitzt, die im Wesentlichen der Gesamtdicke der verkürzten Dichtungslagen (21, 25) entspricht.

7. Metallische Flachdichtung gemäß Anspruch 4,
**dadurch gekennzeichnet,**
**dass** sie zwei verkürzte Dichtungslagen (21, 25) umfasst, zwischen denen die erste Dichtungslage (20) angeordnet ist, welche zu ihren beiden Seiten (24, 27) jeweils ein Höhenausgleichselement (4) aufweist.

8. Metallische Flachdichtung gemäß einem der vorhergehenden Ansprüche,
**dadurch gekennzeichnet,**
**dass** das Höhenausgleichselement ein Bördel (42) ist, der durch Umbiegen des Dichtungsrandes im Bereich der Öffnung (3) erhalten wurde.

9. Metallische Flachdichtung gemäß einem der vorhergehenden Ansprüche,
**dadurch gekennzeichnet,**
**dass** das Material der ersten Dichtungslage (20, 26) teilweise zu deren erster Seite (24) und teilweise zu deren zweiter Seite (27) hin umgefalzt ist.

10. Metallische Flachdichtung gemäß einem der vorhergehenden Ansprüche,
**dadurch gekennzeichnet,**
**dass** das Material der ersten Dichtungslage (20, 26) mehrfach auf sich selbst gefalzt ist.

11. Metallische Flachdichtung gemäß einem der vorhergehenden Ansprüche,
**dadurch gekennzeichnet,**
**dass** das Höhenausgleichselement (4) weiter eine an der ersten Dichtungslage (20) befestigte Auflage, insbesondere eine ringförmige Auflage (41), umfasst.

12. Metallische Flachdichtung gemäß Anspruch 1 oder 2,
**dadurch gekennzeichnet,**
**dass** das Höhenausgleichselement (4) aus einer wellen- und/oder trapezförmigen Prägung (46) der ersten Dichtungslage (20, 26) besteht und der sich an die wellen- und/oder trapezförmige Prägung (46) anschließende Randbereich (47) der ersten Dichtungslage (20, 26) um die Öffnung (3) auf die wellen- und/oder trapezförmige Prägung (46) zurückgefalzt ist.

13. Metallische Flachdichtung gemäß Anspruch 12,
**dadurch gekennzeichnet,**
**dass** die wellen- und/oder trapezförmige Prägung (46) zu beiden Seiten (24, 27) über die erste Dichtungslage (20, 26) vorsteht.

14. Metallische Flachdichtung gemäß einem der vorhergehenden Ansprüche, nämlich Krümmerdichtung.

## Claims

1. A metallic flat gasket (1), comprising at least two superimposed metallic gasket layers (20, 21), of which a first one (20) has a larger spatial expansion than the second shortened gasket layer (21), with the first gasket layer (20) comprising at least one opening (3) for receiving a fastening means in at least one region (23) in which the shortened gasket layer (21) is not present, and a height compensation element (4) which at least partly encloses the opening (3) being arranged in the region (23) containing the opening (3) of the fastening means, which element is formed by bending over a section of the first gasket layer (20),
**characterized in**
**that** the height compensation element (4) is formed out of material (44) from the interior of the first gasket layer (20) from a region around the opening (3) or is formed by crimping over material (43) from the interior of the later opening (3) to the outside by exposing the opening (3).

2. A metallic flat gasket according to claim 1,
**characterized in**
**that** the height compensation element is arranged on the side (24) of the first gasket layer (20) which faces the shortened gasket layer (21).

3. A metallic flat gasket according to claim 1 or 2,
**characterized in**
**that** the height compensation element (4) has a height which corresponds substantially to the thickness of the shortened gasket layer (21).

4. A metallic flat gasket according to one of the preceding claims,
**characterized in**
**that** it comprises several shortened gasket layers (21, 25).

5. A metallic flat gasket according to one of the preceding claims,
**characterized in**
**that** it comprises several first gasket layers with a larger spatial expansion (20, 26).

6. A metallic flat gasket according to claim 4,
**characterized in**
**that** it comprises several shortened gasket layers (21, 25) which are adjacent with respect to each other and the height compensation element (4) has a height which corresponds substantially to the overall thickness of the shortened gasket layers (21, 25).

7. A metallic flat gasket according to claim 4,
**characterized in**
**that** it comprises two shortened gasket layers (21, 25) between which the first gasket layer (20) is arranged which comprises a height compensation element (4) each in respect of its two sides (24, 27).

8. A metallic flat gasket according to one of the preceding claims,
**characterized in**
**that** the height compensation element is a flange (42) which was obtained by bending over the gasket edge in the region of the opening (3).

9. A metallic flat gasket according to one of the preceding claims,
**characterized in**
**that** the material of the first gasket layer (20, 26) is crimped over partly towards its first side (24) and partly towards its second side (27).

10. A metallic flat gasket according to one of the preceding claims,
**characterized in**
**that** the material of the first gasket layer (20, 26) is crimped several times towards itself.

11. A metallic flat gasket according to one of the preceding claims,
**characterized in**
**that** the height compensation element (4) further comprises a support, especially an annular support (41), fastened to the first gasket layer (20).

12. A metallic flat gasket according to claim 1 or 2,
**characterized in**
**that** the height compensation element (4) consists of a wave-like and/or trapezoid embossing (46) of the first gasket layer (20, 26) and the boundary region (47) of the first gasket layer (20, 26) about the opening (3) which is adjacent to the wave-like and/or trapezoid embossing (46) is crimped back to the wave-like and/or trapezoid embossing (46).

13. A metallic flat gasket according to claim 12,
**characterized in**
**that** the wave-like and/or trapezoid embossing (46) protrudes on both sides (24, 27) beyond the first gasket layer (20, 26).

14. A metallic flat gasket according to one of the preceding claims, namely a manifold gasket.

## Revendications

1. Joint plat métallique (1) avec au moins deux couches d'étanchéité métalliques (20, 21) superposées, dont la première (20) présente une plus grande étendue dans l'espace que la deuxième couche d'étanchéité raccourcie (21), la première couche d'étanchéité (20) présentant, dans au moins une zone (23) dans laquelle la couche d'étanchéité raccourcie (21) ne se trouve pas, au moins une ouverture (3) pour recevoir un moyen de fixation et un élément de compensation de la hauteur (4), formé par pliage d'une partie de la première couche d'étanchéité (20), étant disposé entourant au moins partiellement l'ouverture (3) étant disposé dans la zone (23) contenant l'ouverture pour le moyen de fixation (3),
**caractérisé en ce**
**que** l'élément de compensation de la hauteur (4) est formé à partir de matériau (44) provenant de l'intérieur de la première couche d'étanchéité (20) dans une zone entourant l'ouverture (3) ou par repliement de matériau (43) à partir de l'intérieur de la future ouverture (3) en dégageant l'ouverture (3).

2. Joint plat métallique selon la revendication 1,
**caractérisé en ce**
**que** l'élément de compensation de la hauteur est disposé sur le côté (24) de la première couche d'étanchéité (20) tourné vers la couche d'étanchéité raccourcie (21).

3. Joint plat métallique selon la revendication 1 ou 2,
**caractérisé en ce**
**que** l'élément de compensation de la hauteur (4) a une hauteur correspondant sensiblement à l'épaisseur de la couche d'étanchéité raccourcie (21).

4. Joint plat métallique selon l'une des revendications précédentes,
**caractérisé en ce**
**qu'**il comporte plusieurs couches d'étanchéité raccourcies (21, 25).

5. Joint plat métallique selon l'une des revendications précédentes,
**caractérisé en ce**
**qu'**il comporte plusieurs premières couches d'étanchéité (20, 26) ayant une plus grande étendue dans l'espace.

6. Joint plat métallique selon la revendication 4,
**caractérisé en ce**
**qu'**il comporte plusieurs couches d'étanchéité raccourcies (21, 25) voisines les unes des autres et l'élément de compensation de la hauteur (4) a une hauteur correspondant sensiblement à l'épaisseur totale des couches d'étanchéité raccourcies (21, 25).

7. Joint plat métallique selon la revendication 4,
**caractérisé en ce**
**qu'**il comprend deux couches d'étanchéité raccourcies (21, 25) entre lesquelles est disposée la première couche d'étanchéité (20), qui possède un élément de compensation de la hauteur (4) sur chacune de ses deux faces (24, 27).

8. Joint plat métallique selon l'une des revendications précédentes,
**caractérisé en ce**
**que** l'élément de compensation de la hauteur est un bord rabattu (42) obtenu en retournant le bord du joint au niveau de l'ouverture (3).

9. Joint plat métallique selon l'une des revendications précédentes,
**caractérisé en ce**
**que** le matériau de la première couche d'étanchéité (20, 26) est en partie replié vers sa première face (24) et en partie vers sa deuxième face (27).

10. Joint plat métallique selon l'une des revendications précédentes,
**caractérisé en ce**
**que** le matériau de la première couche d'étanchéité (20, 26) est replié plusieurs fois sur lui-même.

11. Joint plat métallique selon l'une des revendications précédentes,
**caractérisé en ce**
**que** l'élément de compensation de la hauteur (4) possède en outre un appui fixé sur la première couche d'étanchéité (20), en particulier un appui annulaire (41).

12. Joint plat métallique selon la revendication 1 ou 2,
**caractérisé en ce**
**que** l'élément de compensation de la hauteur (4) se compose d'un gaufrage (46) en forme d'ondulations et/ou trapézoïdal de la première couche d'étanchéité (20, 26) et la zone de bord (47) de la première couche d'étanchéité (20, 26) faisant suite au gaufrage (46) en forme d'ondulations et/ou trapézoïdal est repliée autour de l'ouverture (3) sur le gaufrage (46) en forme d'ondulations et/ou trapézoïdal.

13. Joint plat métallique selon la revendication 12,
**caractérisé en ce**
**que** le gaufrage (46) en forme d'ondu!ations et/ou trapézoïdal dépasse des deux côtés (24, 27) au-delà de la première couche d'étanchéité (20, 26).

14. Joint plat métallique selon l'une des revendications précédentes, à savoir joint d'étanchéité pour coudes.
